# EUROPEAN PATENT SPECIFICATION

(11) **EP 1 222 543 B1**
(45) Date of publication and mention of the grant of the patent: **04.06.2003**
(21) Application number: 00953203.7
(22) Date of filing: 14.08.2000
(51) Int. Cl.: G06F 11/00

(54) **METHOD AND DEVICE FOR IMPROVING THE RELIABILITY OF A COMPUTER SYSTEM**
VERFAHREN UND VORRICHTUNG ZUR VERBESSERUNG DER ZUVERLÄSSIGKEIT EINES COMPUTERSYSTEMS
TECHNIQUE PERMETTANT D'AMELIORER LA FIABILITE D'UN SYSTEME INFORMATIQUE ET DISPOSITIF CORRESPONDANT

(30) Priority: 16.08.1999 FI 991735
(43) Date of publication of application: 17.07.2002
(73) Proprietor: Nokia Corporation, 02150 Espoo (FI)
(72) Inventor: KARPPANEN, Marko, FIN-00140 Helsinki (FI)
(74) Representative: Simmelvuo, Markku
(86) International application number: FI0000689
(87) International publication number: WO01013231

(56) References cited:
- EP-A2- 0 779 579
- EP-A2- 0 851 363
- US-A- 5 729 762
- DATABASE WPI Week 199717, Derwent Publications Ltd., London, GB; AN 1997-187788, XP002952858 & JP 9 048 164 A (RICOH KK) 18 February 1997

## Description

The present invention relates to computer systems. In particular, the invention concerns a method and device for improving the reliability of a computer system.

### BACKGROUND OF THE INVENTION

In computer systems, standardized bus solutions are used to interconnect different peripherals or processor systems. CompactPCI (PCI, Peripheral Component Interconnect) is a bus solution based on the PCI bus, used especially in computer systems intended for industrial and/or embedded applications in mechanically demanding environments. A more extensive description of the properties of the PCI bus is to be found in the publication "PCI Local Bus Specification", PCI Special Interest Group, June 1, 1995.

Units connected to the bus communicate with each other by using a special addressing sequence. In certain addressing sequences, an addressing unit addresses a unit to be addressed or waits for a response to the addressing until the addressed unit responds. If the unit addressed is defective, it is unable to respond to the addressing, in which case the entire computer or microcomputer system will remain waiting for the release of the address bus. This may result in an error situation in the entire system. An example of this type of situation arises in certain addressing modes of the CompactPCI bus in which the addressing sequence does not include any element for the monitoring of bus release. Under these conditions, a problem arises if the plug-in unit is defective, in which case it may, acting via an interface circuit, keep the DEV-SEL# signal of the CompactPCI bus active and the TRDY# signal inactive, thus indicating that it is aware of being addressed (DEVSEL#) but is not yet ready for action. The system controlling the PCI bus remains waiting for the release of the bus and the operation of the system is thus blocked up.

Typically, the master unit of the system is provided with a so-called watchdog timer, which has to be reset at certain predetermined intervals. If the watchdog timer is not reset, then the system will reboot, i.e. reset itself. This may result in an endless loop and a crash of the system. However, in the above example situation, the watchdog timer is not necessarily started at all, or it may not "notice" the problematic situation that has arisen.

EP-A-0 851 363 discloses a method and system for improving the reliability of a computer system. This document discloses a System Management Module (SSM) which is coupled to a PCI bus in order to monitor the other components on the PCI bus. In case of a failure, the SSM disables or replaces the failing component on the PCI bus.

The object of the present invention is to eliminate the problems described above or at least to significantly alleviate them. A further object of the invention is to disclose a new type of method and device for disconnecting a defective unit from a computer system in the event of a fault. Another object of the invention is to improve the reliability of the PCI bus system by using a simple monitoring mechanism working internally in the device connected to the bus.

### BRIEF DESCRIPTION OF THE INVENTION

The present invention is defined by the appended independent claims 1 and 5.

In the present invention, a plug-in unit connected to a PCI bus or an interface circuit acting as the interface between the bus and the plug-in unit is provided with a watchdog timer for internal monitoring of the addressing of the plug-in unit. This makes it possible to detect error situations that are not necessarily detected by mechanisms implemented in the master system controlling the PCI bus, thus allowing the consequent problems to be avoided.

The invention concerns a method for improving the reliability of a computer system. The computer system comprises a bus, preferably a CompactPCI bus. In addition, the system comprises an interface circuit and a plug-in unit which is connected to the bus via the interface circuit. In the method, the plug-in unit is addressed via the bus. Addressing refers to e.g. I/O and memory addressing directed at the plug-in unit. According to the invention, the duration of addressing is monitored by the interface circuit, and if it exceeds a predetermined length of time, then the addressing is interrupted. The monitoring of addressing can be implemented by providing the interface circuit with a watchdog timer, which is activated and possibly initialized at the start of addressing of the plug-in unit. If the duration of addressing exceeds a time limit preset in the watchdog timer, then an abort of addressing is performed e.g. upon an initiative by the interface circuit.

In a preferred embodiment of the method, a TARGET ABORT type addressing abort operation is performed by the interface circuit as described e.g. in the above-mentioned publication "PCI Local Bus Specification", page 41. In this case, the interface circuit performs the abort of addressing even if the plug-in unit should be out of order and unable to abort the addressing itself.

In an embodiment, the SERR# signal is set into active state in the bus by the interface circuit after an abort of addressing. In consequence of these actions, the master unit controlling the bus can disconnect the faulty plug-in unit from the bus. In a preferred embodiment of the invention, the Signaled System Error bit is set by the interface circuit into active state in the status register of the plug-in unit if the duration of addressing exceeds the time value preset in the watchdog timer. On the basis of the Signaled System Error bit, the plug-in unit detects that the interface circuit has generated an error message for the bus. Based on this, the plug-in unit can change its operational status, e.g. by indicating the error situation via a LED comprised in the plug-in unit or a corresponding signal denoting a fault. The above-mentioned signals are also described in the publication "PCI Local Bus Specification" referred to above.

The invention also concerns an interface circuit for improving the reliability of a computer system as described above. According to the invention, the interface circuit comprises a watchdog timer, means for starting timing upon the start of addressing, and means for aborting the addressing if its duration exceeds a time value preset in the watchdog timer. In an embodiment of the invention, the bus is a CompactPCI bus. The interface circuit preferably comprises means for terminating addressing. In addition, the interface circuit comprises means for setting the SERR# signal into active state in the bus if the duration of addressing has exceeded the time limit preset in the watchdog timer or when the interface circuit has given to the bus a notice of termination of addressing. Furthermore, the interface circuit may comprise means for setting the Signaled System Error bit into active state in the status register of the plug-in unit if the duration of addressing has exceeded the time value preset in the watchdog timer or after the interface circuit has given to the bus a notice of termination of addressing.

The invention provides the advantage of enabling the computer system to detect a defective plug-in unit and disable it without any actions on the user's part. Furthermore, the invention makes it possible to avoid an error situation affecting the entire system as the faulty unit incapable of responding to addressing will not occupy system resources. At the same time, a system diagnostics arrangement tells the serviceman which one of the plug-in units of the system needs repairing. The watchdog timer can be easily and economically implemented on the interface circuit, so the invention is applicable in many different environments.

### LIST OF ILLUSTRATIONS

In the following, the invention will be described by the aid of a few examples of its embodiments with reference to the attached drawing, wherein
Fig. 1a and 1b present diagrams representing an embodiment of the system of the invention;
Fig. 2 presents a diagram giving a general illustration of the signalling associated with a CompactPCI bus application according to the invention; and
Fig. 3 presents an embodiment of the method of the invention in the form of a flow diagram.

### DETAILED DESCRIPTION OF THE INVENTION

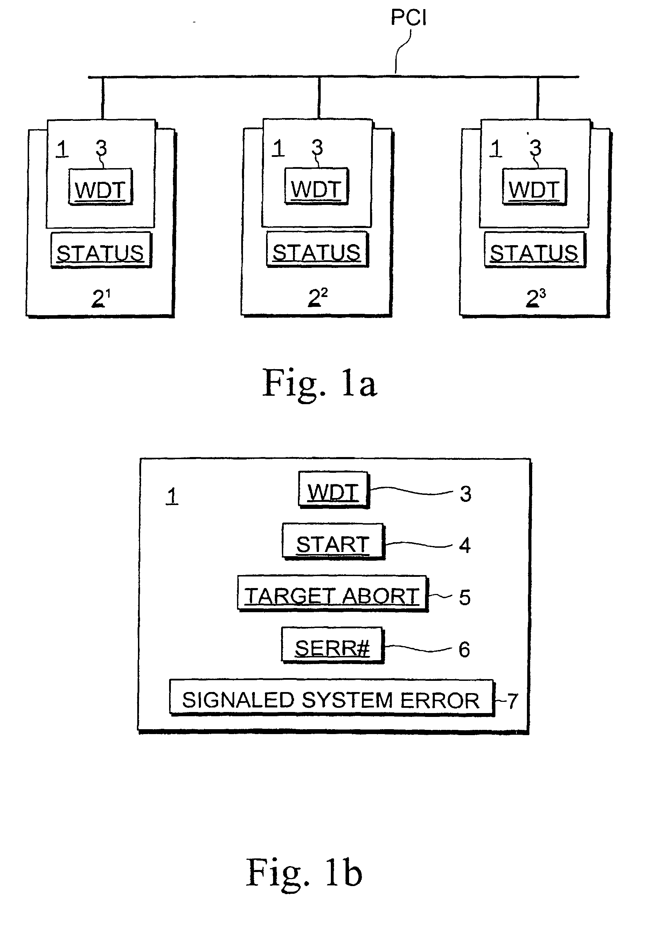

Fig. 1a presents a diagram representing a system according to the invention. The system comprises a bus PCI, which in the case of this example is a CompactPCI bus. Connected to the CompactPCI bus are a plurality of plug-in units 2¹, 2², 2³ using interface circuits 1. A plug-in unit 2 comprised in the system may be e.g. a bus master unit 2¹, of which there may be one or more. The plug-in unit 2 may also be a slave unit 2², an embedded system or an auxiliary device 2³ enhancing the properties of the system. An example of the computer system is the DX200 telephone switching system manufactured by Nokia, in which the plug-in units are connected to a CompactPCI bus.

The components to be connected to the CompactPCI bus are subject to certain requirements regarding their operation. These requirements describe the signalling used in the PCI bus and the operation of the bus after the receipt or transmission of different signals. These requirements will not be described in detail in this context; instead, reference is made to the above-mentioned publication "PCI Local Bus Specification", which gives a detailed description of said requirements.

In the example, the interface circuit 1 is implemented as a separate component connected to the plug-in unit 2, but it may also be implemented as a part of the plug-in unit. The interface circuit 1 is e.g. a functional entity implemented using a FPGA circuit (FPGA, Field Programmable Gate Array), in which case certain functions of the plug-in unit 2 as well can be implemented in the same circuit. Corresponding functions can also be achieved using discrete components or an ASIC circuit (ASIC, Application Specific Integrated Circuit).

The interface circuit 1 comprises the required components and program blocks - reference is made to the above-mentioned publication - for implementing the communication between the plug-in unit 2 and the bus PCI, so the interface circuit acts as a link between the plug-in unit 2 and the bus functions. According to the invention, the interface circuit 1 comprises a watchdog timer 3 (WDT), which monitors the execution times of addressing operations in the bus PCI and initiates actions for the indication and elimination of the error situation if the execution time exceeds a predetermined time limit.

Fig. 1b presents a diagram representing an embodiment of the interface circuit 1. In addition to the watchdog timer 3, the interface circuit comprises means 4 for activating the watchdog timer upon the start of addressing directed at the plug-in unit 2. In practice, these means 4 are implemented in conjunction with the signalling part of the interface circuit by using a software block which starts timing upon detecting a given signal or signals in an active state. Other methods known to the skilled person may also be used to implement the said means 4. The software block 4 also identifies the address of the plug-in unit 2 connected to the interface circuit 1. This ensures that only the watchdog timer of the right plug-in unit 2 will be started, which means that plug-in units less frequently addressed will not produce any unnecessary fault signals.

TARGET ABORT type termination of addressing is implemented using a given software section or block 5, in which the aborting function is triggered by the status of the watchdog timer 3. In practice, the triggering factor is timer overflow. In this case, the functionality of the interface circuit 1 may save the entire system from crashing even if the plug-in unit should be defective. TARGET ABORT type termination of addressing refers to abnormal termination of addressing in a situation where the addressed plug-in unit (target) detects a fatal malfunction or is unable to execute a request addressed to it. The interface circuit 1 also comprises means 6 for setting the SERR# signal into active state in the bus if the duration of addressing has exceeded the time value preset in the watchdog timer 3. In practice, this, too, is a functional property of the interface circuit and these means 6 can be implemented using a suitable program or program block. The SERR# signal is used in the system to report errors that result in serious malfunctions of the system. Further, using means 7, the Signaled System Error bit is set into active state in the status register STATUS of the plug-in unit 2 if the duration of addressing has exceeded the time value preset in the watchdog timer, i.e. if addressing has been interrupted. This, too, is a functional property of the interface circuit and means 7 can be implemented using a suitable program or program block. Let it additionally be stated that the watchdog timer 3 and the means 4 - 7 provided in the interface circuit can be implemented in an FPGA circuit or using discrete components. The function of the invention may be implemented in all of the interface circuits 1 or in only some of them.

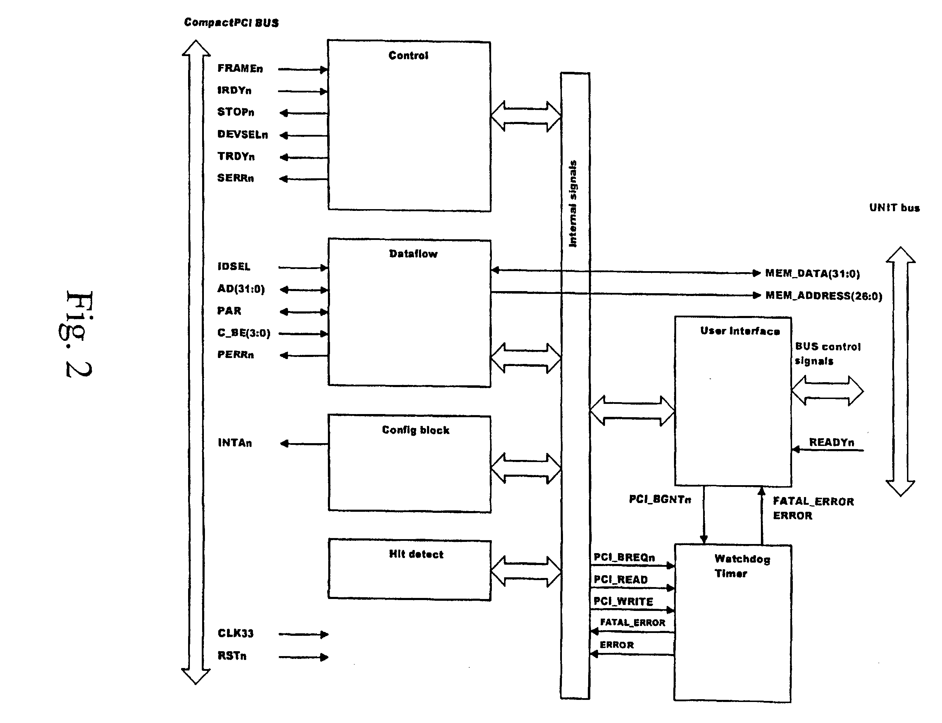

Fig. 2 presents an example giving a more detailed representation of the components shown in Fig. la and 1b. Fig. 2 illustrates the components and signalling in the interface circuit of a plug-in unit or interface unit at block diagram level. The interface circuit is connected to a CompactPCI bus (CompactPCI BUS). The operation and function of these components are obvious to the skilled person and therefore we shall not describe them in detail except for parts that are significant in respect of the invention. The watchdog timer (Fig. 2) is started when an addressing sequence in the PCI bus begins, i.e. when a plug-in unit behind an interface circuit is addressed via the bus. The interface circuit detects the addressing e.g. by an active IDSEL signal indicating the selection of a plug-in unit.

Before addressing is started, the PCI bus has to request access to the internal bus of the plug-in unit by setting the PCI_BREQ signal into active state. To the watchdog timer, this is an indication of addressing being started, and it is started. When the User Interface logic hands over the internal bus to the PCI bus, the PCI_BGNTn signal is set into active state and at the same time the watchdog timer is advised to stop counting. This action resets the watchdog timer. Having gained access to the internal bus, the PCI bus starts a write or read cycle by setting the PCI_WRITE or PCI_{_}READ signal into active state.

If the PCI circuit is in WAIT state, in which case each bus cycle has to be acknowledged with a READY signal, then the watchdog timer is started. In this case, the watchdog timer is stopped when the READYn signal is active, the PCI_WRITE or PCI_READ signal being thereby deactivated, which in practice means that the operation has been completed. The PCI circuit is in WAIT state when software or FPGA circuit code is being loaded into the unit in question or when the unit requires that all addressing operations be performed on a WAIT basis. When the PCI circuit is not in WAIT state, the watchdog timer does not monitor individual addressing operations; instead, it only monitors allocation requests for the unit's internal bus on the basis of the PCI_{_}BREQn and PCI BGNTn signals.

If the time limit set in the watchdog timer is reached while the PCI circuit is in WAIT state, then the following actions will be performed:
addressing is aborted or the PCI bus cycle is interrupted,
the control signal applied to the bus of the unit is deactivated,
the internal status engines of the PCI circuit are initialized,
the SIGNALED SYSTEM ERROR bit in the STATUS register is set,
the SIGNALED TARGET ABORT bit in the STATUS register is set,
the SERR# signal for the CompactPCI bus is activated, whereupon the circuit returns to initial state to wait for new addressing.
In practice, the software in the master computer controlling the CompactPCI bus further disables the defective plug-in unit, and the party responsible for system maintenance is informed about the fault.

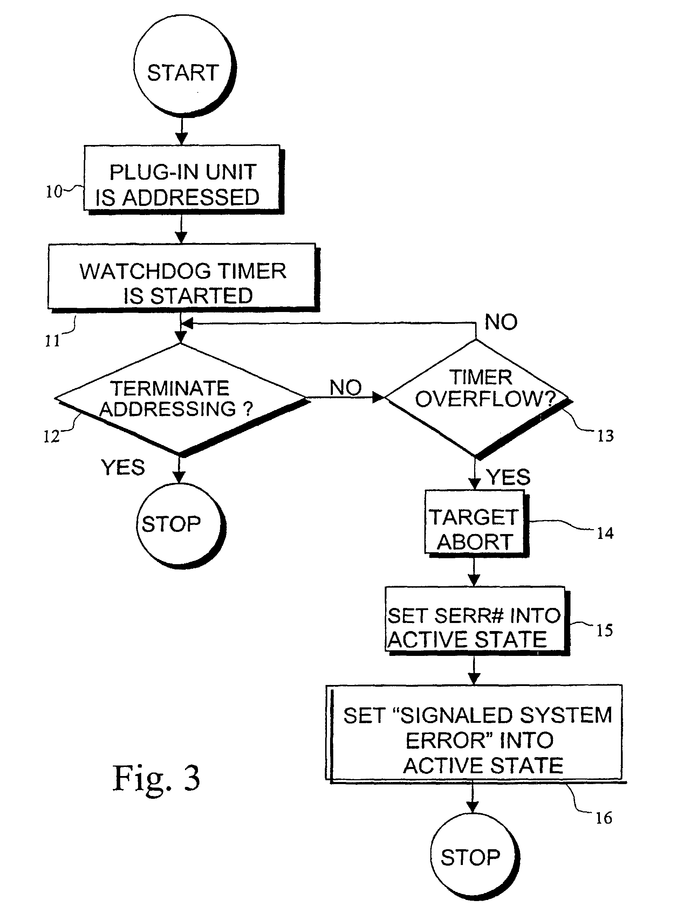

Fig. 3 presents a flow diagram giving the steps comprised in a method according to the invention. In step 10, a plug-in unit 1 is addressed from the bus PCI. The addressing may be I/O type addressing or memory addressing. The addressing device may be e.g. a bus master unit 2¹. In step 11, the interface circuit 1 detects the addressing and starts the watchdog timer 3. In steps 12 and 13, a check is carried out to establish the state of the addressing in relation to the watchdog timer 3. If the addressing is terminated before an overflow occurs in the watchdog timer 3, then the timer is stopped and left in an inactive state, waiting for the next occurrence of addressing. If an overflow occurs in the watchdog timer 3, then the procedure goes on to step 14. In step 14, a Target Abort type termination of addressing is performed. In step 15, the SERR# signal is set into active state in the bus PCI. In step 16, the Signaled System Error bit is set into active state in the status register of the plug-in unit 2.

The invention is not restricted to the examples of its embodiments described above; instead, many variations are possible within the scope of the inventive idea defined in the claims.

## Claims

1. Method for improving the reliability of a computer system, said computer system comprising:
a bus (PCI);
an interface circuit (1); and
a plug-in unit (2), which is connected to the bus via the interface circuit (1); and
in which method the plug-in unit (2) is addressed via the bus (PCI), **characterized in that**:
addressing operations directed at the plug-in unit (2) are monitored by the interface circuit;
the duration of addressing of the plug-in unit is measured by the interface circuit (1); and when the duration exceeds a predetermined period of time, then
the addressing is terminated by the interface circuit (1) by sending into the bus (PCI) a signal indicating termination of addressing.

2. Method as defined in claim 1, **characterized in that** the duration of addressing is monitored using a watchdog timer (3) with a predetermined timing set in it.

3. Method as defined in claim 1, **characterized in that**, when addressing has been terminated, an error signal is set by the interface circuit (1) into active state in the bus (PCI).

4. Method as defined in claim 1, **characterized in that**, when addressing has been terminated, a signal indicating an error condition in the plug-in unit (2) is set by the interface circuit (1) into active state in the status register (STATUS) of the plug-in unit.

5. Interface circuit for improving the reliability of a computer system, said computer system comprising:
a bus (PCI);
a plug-in unit (2) which is connected to the bus (PCI) via the interface circuit (1) and addressed via the bus (PCI);
**characterized in that** the interface circuit (1) comprises:
a watchdog timer (3);
means (4) for starting the watchdog timer upon the start of an addressing operation directed at the plug-in unit (2); and
means (5) for sending into the bus (PCI) a signal indicating termination of addressing.

6. Interface circuit as defined in claim 5 **characterized in that** the interface circuit (1) comprises means (6) for setting an error signal into active state in the bus (PCI).

7. Interface circuit as defined in claim 5 or 6, **characterized in that** the interface circuit (1) comprises means (7) for setting a signal indicating an error condition in the plug-in unit (2) into active state in the status register (STATUS) of the plug-in unit.

8. Interface circuit as defined in claim 5, **characterized in that** the bus (PCI) is a CompactPCI bus.

## Patentansprüche

1. Verfahren zur Verbesserung der Zuverlässigkeit eines Computersystems, wobei das Computersystem umfasst:
einen Bus (PCl);
eine Schnittstellenschaltung (1); und
eine Einsteckeinheit (2), die mit dem Bus über die Schnittstellenschaltung (1) verbunden ist; und
wobei in dem Verfahren die Einsteckeinheit (2) über den Bus (PCI) adressiert wird,
**dadurch gekennzeichnet, dass**:
auf die Einsteckeinheit (2) gerichtete Adressierungsoperationen durch die Schnittstellenschaltung überwacht werden;
die Dauer einer Adressierung der Einsteckeinheit durch die Schnittstellenschaltung (1) gemessen wird; und wenn die Dauer eine vorbestimmte Zeitperiode überschreitet,
dann wird die Adressierung durch die Schnittstellenschaltung (1) beendet durch Senden eines die Beendigung der Adressierung anzeigenden Signals an den Bus (PCl).

2. Verfahren nach Anspruch 1,
**dadurch gekennzeichnet, dass** die Dauer der Adressierung unter Verwendung einer Totmann-Schaltung (3) mit einer darin eingestellten vorbestimmten Zeitmessung erfolgt.

3. Verfahren nach Anspruch 1,
**dadurch gekennzeichnet, dass** ein Fehlersignal bei Beendigung der Adressierung in einen aktiven Zustand versetzt wird durch die Schnittstellenschaltung (1) in dem Bus (PCl).

4. Verfahren nach Anspruch 1,
**dadurch gekennzeichnet, dass** ein einen Fehlerzustand in der Einsteckeinheit (2) anzeigendes Signal bei Beendigung der Adressierung in einen aktiven Zustand versetzt wird durch die Schnittstellenschaltung (1) in dem Statusregister (STATUS) der Einsteckeinheit.

5. Schnittstellenschaltung zur Verbesserung der Zuverlässigkeit eines Computersystems, wobei das Computersystem umfasst:
einen Bus (PCl);
eine Einsteckeinheit (2), die über die Schnittstellenschaltung (1) mit dem Bus (PCl) verbunden ist und über den Bus (PCl) adressiert wird;
**dadurch gekennzeichnet, dass** die Schnittstellenschaltung (1) umfasst:
eine Totmann-Schaltung (3);
eine Einrichtung (4) zum Starten der Totmann-Schaltung (3) beim Beginn einer auf die Einsteckeinheit (2) gerichteten Adressierungsoperation; und
eine Einrichtung (5) zum Senden eines die Beendigung der Adressierung anzeigenden Signals in den Bus (PCl).

6. Schnittstellenschaltung nach Anspruch 5,
**dadurch gekennzeichnet, dass** die Schnittstellenschaltung (1) eine Einrichtung (6) umfasst zum Versetzen eines Fehlersignals in einen aktiven Zustand in dem Bus (PCl).

7. Schnittstellenschaltung nach Anspruch 5 oder 6,
**dadurch gekennzeichnet, dass** die Schnittstellenschaltung (1) eine Einrichtung (7) umfasst zum Versetzen eines einen Fehlerzustand in der Einsteckeinheit (2) anzeigenden Signals in einen aktiven Zustand in dem Statusregister (STATUS) der Einsteckeinheit.

8. Schnittstellenschaltung nach Anspruch 5,
**dadurch gekennzeichnet, dass** der Bus (PCI) ein CompactPCl-Bus ist.

## Revendications

1. Procédé destiné à améliorer la fiabilité d'un système informatique, ledit système informatique comprenant :
un bus (PCI) ;
un circuit d'interface (1) ; et
un dispositif enfichable (2) qui est connecté au bus via le circuit d'interface (1) ; et
dans lequel procédé le dispositif enfichable (2) est adressé via le bus (PCI), **caractérisé en ce que** :
des opérations d'adressage dirigées au niveau du dispositif enfichable (2) sont contrôlées par le circuit d'interface ;
la durée de l'adressage du dispositif enfichable est mesurée par le circuit d'interface (1) ; et lorsque la durée dépasse une période de temps prédéterminée, alors
l'adressage est achevé par le circuit d'interface (1) en envoyant dans le bus (PCI) un signal indiquant la fin de l'adressage.

2. Procédé selon la revendication 1, **caractérisé en ce que** la durée de l'adressage est contrôlée en utilisant un chien de garde (3) pourvu d'un cadencement établi prédéterminé.

3. Procédé selon la revendication 1, **caractérisé en ce que**, lorsque l'adressage est terminé, un signal d'erreur est établi par le circuit d'interface (1) à l'état actif dans le bus (PCI).

4. Procédé selon la revendication 1, **caractérisé en ce que**, lorsque l'adressage est terminé, un signal indiquant une condition d'erreur dans le dispositif enfichable (2) est établi à l'état actif par le circuit d'interface (1) dans le registre d'état (STATUS) du dispositif enfichable.

5. Circuit d'interface destiné à améliorer la fiabilité d'un système informatique, ledit système informatique comprenant :
un bus (PCI) ;
un dispositif enfichable (2) qui est connecté au bus (PCI) via le circuit d'interface (1) et adressé via le bus (PCI) ;
**caractérisé en ce que** le circuit d'interface (1) comprend :
un chien de garde (3) ;
un moyen (4) destiné à lancer le chien de garde sur démarrage d'une opération d'adressage dirigée au niveau du dispositif enfichable (2) ; et
un moyen (5) destiné à envoyer dans le bus (PCI) un signal indiquant la fin de l'adressage.

6. Circuit d'interface selon la revendication 5, **caractérisé en ce que** le circuit d'interface (1) comprend un moyen (6) destiné à établir à l'état actif un signal d'erreur dans le bus (PCI).

7. Circuit d'interface selon la revendication 5 ou 6, **caractérisé en ce que** le circuit d'interface (1) comprend un moyen (7) destiné à établir un signal indiquant une condition d'erreur dans le dispositif enfichable (2) à l'état actif dans le registre d'état (STATUS) du dispositif enfichable.

8. Circuit d'interface selon la revendication 5, **caractérisé en ce que** le bus (PCI) est un bus Compact PCI.
